# EUROPÄISCHE PATENTSCHRIFT

(11) **EP 3 738 796 B1**
(45) Veröffentlichungstag und Bekanntmachung des Hinweises auf die Patenterteilung: **08.06.2022**
(21) Anmeldenummer: 20173544.6
(22) Anmeldetag: 07.05.2020
(51) Int. Cl.: B60C 23/00

(54) **VERFAHREN ZUR REIFENFÜLLDRUCKBESTIMMUNG EINES FAHRZEUGS**
METHOD FOR DETERMINING THE TYRE PRESSURE OF A VEHICLE
PROCÉDÉ DE DÉTERMINATION DE LA PRESSION DE GONFLAGE DES PNEUS D'UN VÉHICULE

(30) Priorität: 11.05.2019 DE 102019003345
(43) Veröffentlichungstag der Anmeldung: 18.11.2020
(73) Patentinhaber: Deere & Company, Moline, IL 61265 (US)
(72) Erfinder: SCHOTT, Florian, 68163 Mannheim (DE); BAUM, Bernd, 68163 Mannheim (DE); FRITZ, Norbert, 68163 Mannheim (DE)
(74) Vertreter: Dehnhardt, Florian Christopher

(56) Entgegenhaltungen:
- DE-A1- 10 227 484
- DE-A1-102015 220 743
- DE-B4-112009 003 587

## Beschreibung

Ein derartiges Verfahren für ein aus einem Traktor und einem als Feldspritze oder Düngerstreuer ausgebildeten landwirtschaftlichen Arbeitsgerät bestehendes Fahrzeugsystem geht beispielsweise aus der DE 10 2015 220 743 A1 hervor. Das insofern bekannte Verfahren sieht die sensorische Ermittlung einer Querneigungsgröße vor, die eine Querneigung eines Fahrzeugaufbaus gegenüber einem befahrenen und/oder zu befahrenden Untergrund repräsentiert, wobei ausgehend von der ermittelten Querneigungsgröße ein in linken und rechten Fahrzeugreifen aufzubauender Reifenfülldruck derart bestimmt und mittels einer Reifenfüllanlage eingesteuert wird, dass der Fahrzeugaufbau im Sinne einer Verringerung der ermittelten Querneigung gegenüber dem befahrenen und/oder zu befahrenden Untergrund gezielt verkippt wird. Somit lässt sich auch an einem quergeneigten Hang die für den Betrieb bestimmter landwirtschaftlicher Arbeitsgeräte erforderliche Parallelität gegenüber dem zu bearbeitenden Untergrund sicherstellen.

Die dem bekannten Verfahren zugrunde liegende Vorgehensweise macht nicht bei jedem landwirtschaftlichen Arbeitsgerät Sinn. Soll an einem Traktor ein gezogenes landwirtschaftliches Arbeitsgerät betrieben werden, also beispielsweise ein Pflug, eine Egge, ein Güllefass oder ein Ladewagen, so spielt für den Fall auftretender Querneigungen weniger die Beibehaltung der Parallelität als vielmehr ein optimales Traktionsverhalten wie auch eine möglichst gute Spurhaltigkeit des Fahrzeugsystems eine entscheidende Rolle.

Es ist daher Aufgabe der vorliegenden Erfindung, ein Verfahren der eingangs genannten Art insbesondere an die Bedürfnisse von Fahrzeugsystemen mit gezogenen landwirtschaftlichen Arbeitsgeräten anzupassen.

Diese Aufgabe wird durch ein Verfahren mit den Merkmalen des Patentanspruchs 1 gelöst.

Das erfindungsgemäße Verfahren zur Reifenfülldruckbestimmung für ein Fahrzeugsystem sieht vor, dass von einer Kontrolleinheit Neigungsinformationen hinsichtlich einer Querneigung und/oder Querneigungsänderung des Fahrzeugsystems entlang eines vorausliegenden Streckenverlaufs ermittelt werden, wobei von der Kontrolleinheit nach Maßgabe der ermittelten Neigungsinformationen radindividuell auftretende Radlasten berechnet werden, um einen zur Einhaltung einer vorgegebenen Reifenaufstandsfläche jeweils erforderlichen Reifenfülldruck abzuleiten.

Der Erfindung liegt die Erkenntnis zugrunde, dass beim Befahren eines quergeneigten Hangs auf der hangabwärts gerichteten Seite des Fahrzeugsystems höhere Radlasten auftreten als auf der hangaufwärts gerichteten Seite. Das erfindungsgemäße Verfahren erlaubt es, eine sich daraus ergebende Asymmetrie der Reifenaufstandsflächen durch Befüllen bzw. Entleeren der Fahrzeugreifen entsprechend der sich aus dem jeweils abgeleiteten Reifenfülldruck ergebenden Fülldruckempfehlung gezielt zu kompensieren. Dies geschieht im Allgemeinen so, dass zumindest auf der hangabwärts gerichteten Seite des Fahrzeugsystems eine geeignete Erhöhung des Reifenfülldrucks erfolgt. Je nach Umständen kann auf der hangaufwärts gerichteten Seite zugleich eine entsprechende Verringerung des Reifenfülldrucks erforderlich werden. Im Idealfall stimmen die Reifenaufstandsflächen dann auf beiden Seiten des Fahrzeugsystems miteinander überein. Traktionsverhalten und Spurhaltigkeit des Fahrzeugsystems lassen sich so selbst bei schwierigen Bodenverhältnissen entscheidend verbessern. Dies gilt nicht nur für den Fall eines aus einem Traktor und einem gezogenen landwirtschaftlichen Arbeitsgerät bestehenden Fahrzeuggespanns, sondern auch für beliebige andere landwirtschaftliche Fahrzeuge bzw. Fahrzeuggespanne. Andere Beispiele sind Forstfahrzeuge in Gestalt von Holzvollerntern oder Langholzschleppern, oder auch Baufahrzeuge.

Die Neigungsinformationen werden von der Kontrolleinheit entweder unmittelbar aus der Querneigung oder aber durch zeitliche Integration der Querneigungsänderung ermittelt. Die Querneigungsänderung, mithin die erste oder zweite zeitliche Ableitung der Querneigung, lässt zudem eine Aussage hinsichtlich des tendenziellen Verhaltens der Querneigung entlang des vorausliegenden Streckenverlaufs zu, sodass eine vorausschauende Beurteilung der Radlasten und damit - falls erforderlich - eine frühzeitige Aktualisierung des abgeleiteten Reifenfülldrucks möglich ist.

Die Reifenaufstandsfläche ist dabei durch die Kontaktfläche des Fahrzeugreifens zum Untergrund definiert. Die Kontaktfläche ist vom Reifenwalk abhängig. Letzterer ist umso größer, je höher die Radlast am betreffenden Fahrzeugreifen bzw. je niedriger der Reifenfülldruck ist.

Die Vorgabe der Reifenaufstandsfläche kann unter Beachtung eines für den jeweiligen Fahrzeugreifen einzuhaltenden Mindestfülldrucks erfolgen, wobei dieser derart gewählt wird, dass ein übermäßiger Reifenwalk wie auch eine damit verbundene Beschädigung oder ein Abrutschen des Fahrzeugreifens von der Radfelge ausgeschlossen wird.

Die Berechnung der Radlasten erfolgt insbesondere auf Grundlage eines Verfahrens, wie es in DE 10 2017 205 827 A1 beschrieben ist, und berücksichtigt zugleich am Fahrzeugsystem gegebenenfalls angebrachte bzw. aufgrund zugehöriger Ballastierungsvorschläge anzubringende Zusatzgewichte.

Vorteilhafte Ausgestaltungen des erfindungsgemäßen Verfahrens gehen aus den Unteransprüchen hervor.

Vorzugsweise werden die Neigungsinformationen der Kontrolleinheit seitens eines Neigungssensors und/oder eines kartografischen Speichers bereitgestellt. Der kartografische Speicher ist typischerweise Bestandteil eines satellitengestützten Navigationssystems, das zusätzlich einen GPS-Empfänger zur Bereitstellung von Positionsinformationen hinsichtlich des aktuellen Standorts des Fahrzeugsystems enthält. Die Neigungsinformationen werden in diesem Fall durch Auslesen der mit dem aktuellen Standort des Fahrzeugsystems verorteten und im kartografischen Speicher hinterlegten Angaben hinsichtlich Querneigung und/oder Querneigungsänderung des befahrenen Untergrunds gewonnen.

Auch besteht die Möglichkeit, dass die Neigungsinformationen von der Kontrolleinheit vorausschauend auf Grundlage des seitens eines Systems zur Spurplanung und/oder -haltung festgelegten vorausliegenden Streckenverlaufs ermittelt werden. Hierzu macht sich die Kontrolleinheit die in Bezug auf den festgelegten vorausliegenden Streckenverlauf im kartografischen Speicher hinterlegten Angaben hinsichtlich Querneigung und/oder Querneigungsänderung zu nutze. In diesem Fall lässt sich schon vor Erreichen eines bestimmten Streckenabschnitts der zur Beibehaltung der vorgegebenen Reifenaufstandsfläche erforderliche Reifenfülldruck ableiten und zur Bereitstellung einer entsprechenden Fülldruckempfehlung nutzen.

Bei dem System zur Spurplanung und/oder -haltung handelt es sich beispielsweise um eine autonome Fahrzeugsteuerung (eine solche ist im Falle des Herstellers John Deere insbesondere unter der Bezeichnung "AutoTrac" bekannt), deren Daten im Rahmen einer vorab durchgeführten Arbeitsvorbereitung seitens einer Planungsstelle über einen zentralen Server in einer Daten-Cloud abgelegt und von dort über eine drahtlose Datenaustauschverbindung in die Kontrolleinheit hochgeladen werden.

Die Vorgabe der Reifenaufstandsfläche kann von der Kontrolleinheit in Abhängigkeit von Angaben hinsichtlich der Bodeneigenschaften, des Bodentyps, der Topografie und/oder der Wetterbedingungen angepasst werden. All diese Faktoren haben maßgeblichen Einfluss auf die Traktion des Fahrzeugsystems und damit auf die im Sinne einer größtmöglichen Schonung des Untergrunds über den Reifenfülldruck einzustellende Reifenaufstandsfläche. So lässt eine Kenntnis der Bodeneigenschaften eine Bewertung dahingehend zu, ob der Untergrund weich, hart, sandig oder lehmig ist, wohingegen in Fahrtrichtung liegende Anstiege bzw. Gefälle durch Auswertung topografischer Angaben, wie beispielsweise kartografierter Höhenlinien, ableitbar sind. Die Beobachtung der Wetterbedingungen, zu denen Hinweise auf Regen, Schnee, Eis, Sonneneinstrahlung, Windeinflüsse und Umgebungstemperatur gehören, gegebenenfalls auch über einen längeren Zeitraum mehrerer Tage oder Wochen, erlaubt in Verbindung mit entsprechenden Angaben hinsichtlich des Bodentyps eine verlässliche Aussage dahingehend, ob der Untergrund absehbar matschig oder ausgetrocknet ist. Die Angaben hinsichtlich der Bodeneigenschaften, des Bodentyps und der Topografie können ebenfalls im kartografischen Speicher des Navigationssystems abgelegt sein, wohingegen diejenigen der Wetterbedingungen der Kontrolleinheit über eine drahtlose Datenaustauschverbindung mitgeteilt werden. Zusätzlich können von der Kontrolleinheit Betriebsinformationen des landwirtschaftliche Arbeitsgeräts einbezogen werden, wie beispielsweise eine sich verändernde Lademasse im Falle der Ausbringung von Jauche aus einem Güllefass oder der Aufnahme von Erntegut mittels eines Ladewagens.

Im einfachsten Fall wird von der Kontrolleinheit nach Maßgabe des abgeleiteten Reifenfülldrucks durch Ansteuerung einer Anzeigeeinheit eine Fülldruckempfehlung ausgegeben. Die Fülldruckempfehlung kann von einem Bediener des Fahrzeugsystems derart umgesetzt werden, dass dieser den abgeleiteten und über die Anzeigeeinheit wiedergegebenen Reifenfülldruck durch manuelle Ansteuerung einer in dem Fahrzeugsystem befindlichen Reifenfüllanlage in den betreffenden Fahrzeugreifen einsteuert. Hierbei erfolgt für jeden der Fahrzeugreifen des Fahrzeugsystems eine radindividuelle Ausgabe einer entsprechenden Fülldruckempfehlung.

Alternativ ist es auch denkbar, dass der abgeleitete Reifenfülldruck auf Veranlassung der Kontrolleinheit durch Ansteuerung der Reifenfüllanlage automatisiert und damit besonders bedienerfreundlich in den betreffenden Fahrzeugreifen eingesteuert wird.

Um in einem solchen Fall für den Bediener überraschend ausgeführte Reifendruckregelvorgänge auszuschließen, besteht die Möglichkeit, dass die Einsteuerung des abgeleiteten Reifenfülldrucks von der Kontrolleinheit vorbehaltlich der vorherigen Freigabe durch den Bediener veranlasst wird. Die Freigabe erfolgt beispielsweise über die als berührungsempfindliche Bedienoberfläche ausgebildete Anzeigeeinheit.

Zusätzlich oder alternativ können von der Kontrolleinheit entlang des vorausliegenden Streckenverlaufs liegende Feldund/oder Vorgewendegrenzen bei der Ableitung des Reifenfülldrucks hinsichtlich eines zwischen gegenüberliegenden Fahrzeugseiten durchzuführenden Umfüllvorgangs der Fahrzeugreifen berücksichtigt werden. So weist die Annäherung an Feld- und/oder Vorgewendegrenzen in der Regel auf ein bevorstehendes Wendemanöver des Fahrzeugsystems hin, wobei im Falle einer quergeneigten Ackeroberfläche nach dem Abschluss des Wendemanövers und dem Einbiegen in die nächste Bearbeitungsspur die für die vorhergehende Bearbeitungsspur abgeleiteten Reifenfülldrücke einfach zwischen den beiden Fahrzeugseiten ausgetauscht werden, da davon auszugehen ist, dass sich die Querneigung ihrem Betrag nach zwischen den beiden aufeinanderfolgenden Bearbeitungsspuren nur unwesentlich ändert. Dieser Umfüllvorgang kann auf Veranlassung der Kontrolleinheit durch Ansteuerung der Reifenfüllanlage automatisiert ausgeführt werden. Ein derartiger Automatismus kann als vom Bediener während der Feldbearbeitung aktivierbare Vorgewende-Assistenzfunktion ausgestaltet sein.

Andererseits kann eine Annäherung des Fahrzeugsystems an eine entlang des vorausliegenden Streckenverlaufs liegende Feldund/oder Vorgewendegrenze von der Kontrolleinheit anhand des Aktivierungszustands eines Systems zur Unterstützung eines Wendemanövers erkannt werden. Derartige Systeme sind in Traktoren auch unter der Bezeichnung "Headlandmanagementsystem" bekannt und nehmen sequenzierte Steueraufgaben beim Durchfahren des Vorgewendes wahr, die andernfalls vom Bediener durchzuführen wären. Hierzu gehört unter anderem das automatisierte Anheben und Absenken eines an einem hydraulischen Dreipunkt-Kraftheber angebrachten bodeneingreifenden Arbeitsgeräts wie auch das An- und Abschalten einer Zapfwelle, eines Vorderradantriebs und/oder einer Differentialsperre.

Des Weiteren besteht die Möglichkeit, dass von der Kontrolleinheit Positionsinformationen hinsichtlich des aktuellen Standorts des Fahrzeugsystems mit in dem kartografischen Speicher verzeichneten Feld- und/oder Vorgewendegrenzen verglichen werden, um gegebenenfalls unter Einbeziehung eines festgelegten vorausliegenden Streckenverlaufs eine Vorhersage hinsichtlich zu erwartender Wendemanöver zu treffen. Der festgelegte vorausliegende Streckenverlauf kann sich auch hier aus Informationen des Systems zur Spurplanung und/oder -haltung ergeben. In diesem Fall kann die Bereitstellung der Fülldruckempfehlung bzw. die automatisierte Ansteuerung der Reifenfüllanlage so rechtzeitig erfolgen, dass sich den trägheitsbedingten Füll- und Ablasszeiten der Reifenfüllanlage entsprechend Rechnung tragen lässt.

Um eine mögliche Beeinträchtigung der Traktion während der Feldbearbeitung auszuschließen, wird der Umfüllvorgang vorzugsweise erst beim Eintritt des Fahrzeugsystems ins Vorgewende eingeleitet und anschließend derart weitergeführt, dass dieser beim Verlassen des Vorgewendes abgeschlossen ist. Dementsprechend ist es von Vorteil, wenn eine Fahrt des Fahrzeugsystems im Vorgewende bis zum Abschluss eines zwischen gegenüberliegenden Fahrzeugseiten durchzuführenden Umfüllvorgangs der Fahrzeugreifen entsprechend verlangsamt bzw. verzögert wird. Der Umfang der Verlangsamung bzw. Verzögerung richtet sich hierbei nach den trägheitsbedingten Füll- und Ablasszeiten der Reifenfüllanlage, der im Vorgewende zurückzulegenden Fahrtstrecke sowie der Fahrtgeschwindigkeit des Fahrzeugsystems. Werden insofern geringere Anforderungen gestellt, so ist es grundsätzlich auch möglich, dass der Umfüllvorgang zeitsparend auch schon vor dem Eintritt des Fahrzeugsystems ins Vorgewende eingeleitet wird. Der Umfüllvorgang erfolgt in diesem Fall vorzugsweise etappenweise, indem in einem ersten Schritt zunächst die Fahrzeugreifen auf der hangabwärts gerichteten Fahrzeugseite derart befüllt werden, dass beim Erreichen des Vorgewendes der Reifenfülldruck in den Fahrzeugreifen beider Fahrzeugseiten übereinstimmt. Hierdurch kann vermieden werden, dass aufgrund der Trägheit der Reifenfüllanlage beim Einbiegen in die nächste Bearbeitungsspur die Fahrzeugreifen auf der dann hangabwärts gerichteten Fahrzeugseite möglicherweise noch nicht hinreichend entleert sind und in diesen daher ein zu niedriger, mithin möglicherweise zu einer erhöhten Kippneigung führender Reifenfülldruck vorliegt. Erst in einem nachfolgenden zweiten Schritt wird der Umfüllvorgang durch Entleeren der Fahrzeugreifen auf der hangaufwärts gerichteten Fahrzeugseite auf den hierfür vorgegebenen Reifenfülldruck vollendet.

Das erfindungsgemäße Verfahren zur Reifenfülldrucküberwachung eines Fahrzeugsystems wird im Folgenden anhand der beigefügten Zeichnungen näher erläutert. Hierbei sind übereinstimmende bzw. bezüglich ihrer Funktion vergleichbare Komponenten mit denselben Bezugszeichen gekennzeichnet. Es zeigen:
- Fig. 1: ein Fahrzeugsystem mit einer Vorrichtung zur Ausführung des erfindungsgemäßen Verfahrens zur Reifenfülldruckbestimmung, und
- Fig. 2: ein als Blockdiagramm veranschaulichtes Ausführungsbeispiel des erfindungsgemäßen Verfahrens zur Reifenfülldruckbestimmung.

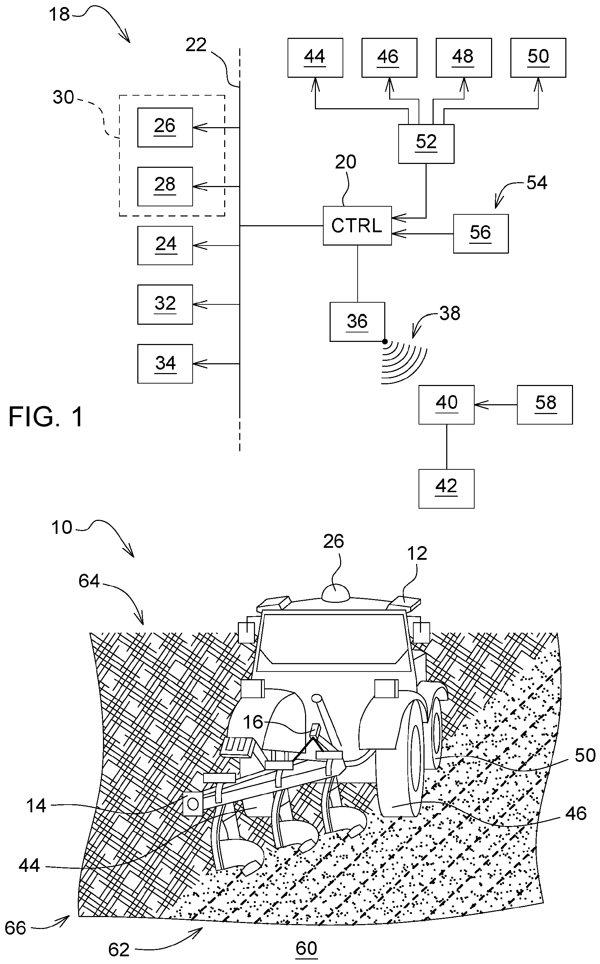

Fig. 1 zeigt ein Fahrzeugsystem mit einer Vorrichtung zur Ausführung des erfindungsgemäßen Verfahrens.

Bei dem Fahrzeugsystem 10 handelt es sich beispielsgemäß um ein aus einem Traktor 12 sowie einem Pflug 14 bestehendes Fahrzeuggespann. Der Pflug 14 ist hierbei an einem im Heckbereich des Traktors 12 vorgesehenen hydraulischen Dreipunkt-Kraftheber 16 angebracht.

Die Darstellung des Fahrzeugsystems 10 als Traktor 12 mit einem Pflug 14 hat lediglich beispielhaften Charakter, so kann es sich ebenso gut auch um ein beliebiges anderes landwirtschaftliches Fahrzeug bzw. Fahrzeuggespann, um ein Forstfahrzeug oder ein Baufahrzeug handeln. Der in Fig. 1 wiedergegebene Pflug 14 stellt lediglich eines von vielen möglichen gezogenen landwirtschaftlichen Arbeitsgeräten dar, so kann an dem Traktor 12 ebenso gut eine Egge, ein Güllefass oder ein Ladewagen angebracht sein.

Die in dem Traktor 12 untergebrachte Vorrichtung 18 umfasst eine mikroprozessorgesteuerte Kontrolleinheit 20, in der ein Programmcode zur Durchführung des erfindungsgemäßen Verfahrens abgelegt ist. Der Kontrolleinheit 20 werden über einen CAN-Datenbus 22 digitalisierte Daten eines Neigungssensors 24, eines mit einem GPS-Empfänger 26 zur Bereitstellung von Positionsinformationen hinsichtlich des aktuellen Standorts des Fahrzeugsystems 10 und einem kartografischen Speicher 28 ausgestatteten Navigationssystems 30, eines Systems zur Spurplanung und/oder -haltung 32, und eines Systems zur Unterstützung eines Wendemanövers 34 übermittelt. Derartige Systeme zur Unterstützung eines Wendemanövers 34 sind in Traktoren auch unter der Bezeichnung "Headlandmanagementsystem" bekannt und nehmen sequenzierte Steueraufgaben beim Durchfahren des Vorgewendes wahr, die andernfalls vom Bediener durchzuführen wären. Hierzu gehört unter anderem das automatisierte Anheben und Absenken eines an dem hydraulischen Dreipunkt-Kraftheber 16 angebrachten bodeneingreifenden Arbeitsgeräts wie auch das An- und Abschalten einer Zapfwelle, eines Vorderradantriebs und/oder einer Differentialsperre.

Eine Mobilfunk- bzw. WLAN-Schnittstelle 36 dient ferner der Herstellung einer drahtlosen Datenaustauschverbindung 38 mit einem zentralen Server 40, der seinerseits Zugriff auf eine Daten-Cloud 42 hat. Des Weiteren ist eine mit zugehörigen Fahrzeugreifen 44, 46, 48, 50 kommunizierende Reifenfüllanlage 52 vorhanden, die sich seitens der Kontrolleinheit 20 entweder automatisiert oder aber manuell über ein Bedienerterminal 54 mit einer als berührungsempfindliche Bedienoberfläche ausgebildeten Anzeigeeinheit 56 ansteuern lässt.

Bei dem System zur Spurplanung bzw. -haltung 32 handelt es sich um eine autonome Fahrzeugsteuerung, deren Daten im Rahmen einer vorab durchgeführten Arbeitsvorbereitung seitens einer Planungsstelle 58 über den zentralen Server 40 in der Daten-Cloud 42 abgelegt und von dort über die drahtlose Datenaustauschverbindung 38 in die Kontrolleinheit 20 hochgeladen werden. Eine derartige autonome Fahrzeugsteuerung ist im Falle des Herstellers John Deere insbesondere unter der Bezeichnung "AutoTrac" bekannt.

Gemäß Fig. 1 befindet sich der Traktor 12 auf einem quergeneigten Hang bzw. einer ebensolchen Ackeroberfläche 60 und fährt entlang einer Bearbeitungsspur 62 in Richtung einer Feld- und/oder Vorgewendegrenze 64. Dort wendet der Traktor 12 und biegt in die nächste Bearbeitungsspur 66 ein. Die Querneigung der Ackeroberfläche 60 führt dazu, dass auf der hangabwärts gerichteten Seite des Fahrzeugsystems 10 höhere Radlasten auftreten als auf der hangaufwärts gerichteten Seite, was in der Folge zu einer entsprechenden Asymmetrie der Reifenaufstandsflächen auf beiden Seiten des Fahrzeugsystems 10 führt.

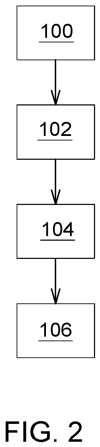

Fig. 2 zeigt ein als Blockdiagramm veranschaulichtes Ausführungsbeispiel des erfindungsgemäßen Verfahrens. Das Verfahren wird nachfolgend in eine Basisfunktion sowie eine zusätzlich vom Bediener während der Feldbearbeitung aktivierbare Vorgewende-Assistenzfunktion unterteilt, wobei letztere eine Anpassung des Reifenfülldrucks im Falle der Durchführung eines Wendemanövers an einem quergeneigten Hang unterstützt.

### Basisfunktion

Die Basisfunktion sieht vor, dass von der Kontrolleinheit 20 in einem ersten Schritt 100 kontinuierlich Neigungsinformationen hinsichtlich einer Querneigung und/oder Querneigungsänderung des Fahrzeugsystems 10 entlang eines vorausliegenden Streckenverlaufs ermittelt werden. Nach Maßgabe der ermittelten Neigungsinformationen werden von der Kontrolleinheit 20 in einem nachfolgenden zweiten Schritt 102 radindividuell auftretende Radlasten berechnet. Die Berechnung der Radlasten erfolgt auf Grundlage eines Verfahrens, wie es in DE 10 2017 205 827 A1 beschrieben ist, und berücksichtigt zugleich am Fahrzeugsystem 10 gegebenenfalls angebrachte bzw. aufgrund zugehöriger Ballastierungsvorschläge anzubringende Zusatzgewichte. Aus diesen Radlasten wiederum wird von der Kontrolleinheit 20 in einem dritten Schritt 104 ein zur Einhaltung einer vorgegebenen Reifenaufstandsfläche jeweils erforderlicher Reifenfülldruck abgeleitet.

Die Neigungsinformationen werden der Kontrolleinheit 20 seitens des Neigungssensors 24 und/oder des kartografischen Speichers 28 bereitgestellt. In letzterem Fall werden die Neigungsinformationen durch Auslesen von mit dem aktuellen Standort des Fahrzeugsystems 10 verorteten und im kartografischen Speicher 28 hinterlegten Angaben hinsichtlich der Querneigung und/oder Querneigungsänderung der befahrenen Untergrunds gewonnen. Die Neigungsinformationen werden dabei entweder unmittelbar aus der Querneigung oder aber durch zeitliche Integration der Querneigungsänderung ermittelt. Die Querneigungsänderung, mithin die erste oder zweite zeitliche Ableitung der Querneigung, lässt eine Aussage hinsichtlich des tendenziellen Verhaltens der Querneigung entlang des vorausliegenden Streckenverlaufs zu, sodass im zweiten Schritt 102 eine vorausschauende Beurteilung der Radlasten und damit eine frühzeitige Aktualisierung des im dritten Schritt 104 abgeleiteten Reifenfülldrucks möglich ist.

Optional werden die Neigungsinformationen von der Kontrolleinheit 20 im ersten Schritt 100 vorausschauend auf Grundlage eines seitens des Systems zur Spurplanung und/oder -haltung 32 festgelegten vorausliegenden Streckenverlaufs ermittelt. Hierzu macht sich die Kontrolleinheit 20 die in Bezug auf den festgelegten vorausliegenden Streckenverlauf im kartografischen Speicher 28 hinterlegten Angaben hinsichtlich Querneigung und/oder Querneigungsänderung zu nutze. In diesem Fall lässt sich schon vor Erreichen eines bestimmten Streckenabschnitts der zur Beibehaltung der vorgegebenen Reifenaufstandsfläche erforderliche Reifenfülldruck ableiten.

Die Vorgabe der Reifenaufstandsfläche wird von der Kontrolleinheit 20 im dritten Schritt 104 in Abhängigkeit von Angaben hinsichtlich der Bodeneigenschaften, des Bodentyps, der Topografie und/oder der Wetterbedingungen angepasst. All diese Faktoren haben maßgeblichen Einfluss auf die Traktion des Fahrzeugsystems 10 und damit auf die im Sinne einer größtmöglichen Schonung des Untergrunds über den Reifenfülldruck einzustellende Reifenaufstandsfläche. So lässt eine Kenntnis der Bodeneigenschaften eine Bewertung dahingehend zu, ob der Untergrund weich, hart, sandig oder lehmig ist, wohingegen in Fahrtrichtung liegende Anstiege bzw. Gefälle durch Auswertung topografischer Angaben, wie beispielsweise kartografierter Höhenlinien, ableitbar sind. Die Beobachtung der Wetterbedingungen, zu denen Hinweise auf Regen, Schnee, Eis, Sonneneinstrahlung, Windeinflüsse und Umgebungstemperatur gehören, gegebenenfalls auch über einen längeren Zeitraum mehrerer Tage oder Wochen, erlaubt in Verbindung mit entsprechenden Angaben hinsichtlich des Bodentyps eine verlässliche Aussage dahingehend, ob der Untergrund absehbar matschig oder ausgetrocknet ist. Die Angaben hinsichtlich der Bodeneigenschaften, des Bodentyps und der Topografie sind ebenfalls im kartografischen Speicher 28 des Navigationssystems 30 abgelegt, wohingegen diejenigen der Wetterbedingungen der Kontrolleinheit 20 über die drahtlose Datenaustauschverbindung 38 mitgeteilt werden. Zusätzlich werden von der Kontrolleinheit 20 Betriebsinformationen des landwirtschaftlichen Arbeitsgeräts einbezogen, wie beispielsweise eine sich verändernde Lademasse im Falle der Ausbringung von Jauche aus einem Güllefass oder der Aufnahme von Erntegut mittels eines Ladewagens. Im Falle des in Fig. 1 dargestellten Pflugs 14 ist diese Funktion dementsprechend deaktiviert.

Um unerwünschte querneigungsbedingte Asymmetrien der Reifenaufstandsflächen zu vermeiden, wird von der Kontrolleinheit 20 für alle Fahrzeugreifen 44, 46, 48, 50 eine einheitliche Reifenaufstandsfläche vorgegeben.

In einem vierten Schritt 106 wird von der Kontrolleinheit 20 nach Maßgabe des im dritten Schritt 104 abgeleiteten Reifenfülldrucks durch Ansteuerung der Anzeigeeinheit 56 eine Fülldruckempfehlung ausgegeben. Die Fülldruckempfehlung kann von einem Bediener des Fahrzeugsystems 10 derart umgesetzt werden, dass dieser den abgeleiteten und über die Anzeigeeinheit 56 wiedergegebenen Reifenfülldruck durch manuelle Ansteuerung der Reifenfüllanlage 52 in den betreffenden Fahrzeugreifen 44, 46, 48, 50 einsteuert. Hierbei erfolgt für jeden der Fahrzeugreifen 44, 46, 48, 50 des Fahrzeugsystems 10 eine radindividuelle Ausgabe einer entsprechenden Fülldruckempfehlung.

Gemäß einer optionalen Weiterbildung der Basisfunktion wird der im dritten Schritt 104 abgeleitete Reifenfülldruck auf Veranlassung der Kontrolleinheit 20 im vierten Schritt 106 durch Ansteuerung der Reifenfüllanlage 52 automatisiert in den betreffenden Fahrzeugreifen 44, 46, 48, 50 eingesteuert.

Um in einem solchen Fall für den Bediener überraschend ausgeführte Reifendruckregelvorgänge auszuschließen, wird die Einsteuerung des abgeleiteten Reifenfülldrucks von der Kontrolleinheit 20 vorbehaltlich der vorherigen Freigabe durch den Bediener veranlasst. Die Freigabe erfolgt über die als berührungsempfindliche Bedienoberfläche ausgebildete Anzeigeeinheit 56.

### Vorgewende-Assistenzfunktion

Wird während der Feldbearbeitung die Vorgewende-Assistenzfunktion vom Bediener über die als berührungsempfindliche Bedienoberfläche ausgebildete Anzeigeeinheit 56 aktiviert, so werden von der Kontrolleinheit 20 zusätzlich im dritten Schritt 104 die entlang des vorausliegenden Streckenverlaufs liegenden Feld- und/oder Vorgewendegrenzen 64 bei der Ableitung des Reifenfülldrucks hinsichtlich eines zwischen gegenüberliegenden Fahrzeugseiten durchzuführenden Umfüllvorgangs der Fahrzeugreifen 44, 46, 48, 50 berücksichtigt. So weist die Annäherung an die Feld- und/oder Vorgewendegrenze 64 auf ein bevorstehendes Wendemanöver des Fahrzeugsystems 10 hin, wobei im Falle der quergeneigten Ackeroberfläche 60 nach dem Abschluss des Wendemanövers und dem Einbiegen in die nächste Bearbeitungsspur 66 die für die vorhergehende Bearbeitungsspur 62 abgeleiteten Reifenfülldrücke zwischen den beiden Fahrzeugseiten einfach ausgetauscht werden, da davon auszugehen ist, dass sich die Querneigung ihrem Betrag nach zwischen den beiden aufeinanderfolgenden Bearbeitungsspuren 62, 66 nur unwesentlich ändert. Dieser Umfüllvorgang wird auf Veranlassung der Kontrolleinheit 20 durch Ansteuerung der Reifenfüllanlage 52 im vierten Schritt 106 automatisiert ausgeführt.

Redundant wird eine Annäherung des Fahrzeugsystems 10 an die entlang des vorausliegenden Streckenverlaufs liegende Feldund/oder Vorgewendegrenze 64 von der Kontrolleinheit 20 anhand des Aktivierungszustands des Systems zur Unterstützung eines Wendemanövers 34 erkannt.

Gemäß einer optionalen Weiterbildung der Vorgewende-Assistenzfunktion werden von der Kontrolleinheit 20 die von dem GPS-Empfänger 26 bereitgestellten Positionsinformationen hinsichtlich des aktuellen Standorts des Fahrzeugsystems 10 mit den in dem kartografischen Speicher 28 verzeichneten Feld- und/oder Vorgewendegrenzen 64 verglichen, um gegebenenfalls unter Einbeziehung eines festgelegten vorausliegenden Streckenverlaufs eine Vorhersage hinsichtlich zu erwartender Wendemanöver zu treffen. Der festgelegte vorausliegende Streckenverlauf ergibt sich auch hier aus Informationen des Systems zur Spurplanung und/oder -haltung 32. In diesem Fall erfolgt die Bereitstellung der Fülldruckempfehlung bzw. die automatisierte Ansteuerung der Reifenfüllanlage 52 so rechtzeitig, dass den trägheitsbedingten Füll- und Ablasszeiten der Reifenfüllanlage 52 entsprechend Rechnung getragen wird.

Um eine mögliche Beeinträchtigung der Traktion während der Feldbearbeitung auszuschließen, wird der Umfüllvorgang erst beim Eintritt des Fahrzeugsystems 10 ins Vorgewende eingeleitet und anschließend derart weitergeführt, dass dieser beim Verlassen des Vorgewendes abgeschlossen ist. Dementsprechend wird eine Fahrt des Fahrzeugsystems 10 im Vorgewende bis zum Abschluss eines zwischen gegenüberliegenden Fahrzeugseiten durchzuführenden Umfüllvorgangs der Fahrzeugreifen 44, 46, 48, 50 durch Eingriff in ein Antriebsmanagement des Fahrzeugsystems 10 entsprechend verlangsamt bzw. verzögert. Der Umfang der Verlangsamung bzw. Verzögerung richtet sich hierbei nach den trägheitsbedingten Füll- und Ablasszeiten der Reifenfüllanlage 52, der im Vorgewende zurückzulegenden Fahrtstrecke sowie der Fahrtgeschwindigkeit des Fahrzeugsystems 10. Werden insofern geringere Anforderungen gestellt, so ist es grundsätzlich auch möglich, dass der Umfüllvorgang zeitsparend auch schon vor dem Eintritt des Fahrzeugsystems 10 ins Vorgewende eingeleitet wird. Der Umfüllvorgang erfolgt in diesem Fall etappenweise, indem in einem ersten Schritt zunächst die Fahrzeugreifen 46, 50 auf der hangabwärts gerichteten Fahrzeugseite derart befüllt werden, dass beim Erreichen des Vorgewendes der Reifenfülldruck in den Fahrzeugreifen 44, 46, 48, 50 beider Fahrzeugseiten übereinstimmt. Hierdurch kann vermieden werden, dass aufgrund der Trägheit der Reifenfüllanlage 52 beim Einbiegen in die nächste Bearbeitungsspur 64 die Fahrzeugreifen 44, 48 auf der dann hangabwärts gerichteten Fahrzeugseite möglicherweise noch nicht hinreichend entleert sind und in diesen daher ein zu niedriger, mithin möglicherweise zu einer erhöhten Kippneigung führender Reifenfülldruck vorliegt. Erst in einem nachfolgenden zweiten Schritt wird der Umfüllvorgang durch Entleeren der Fahrzeugreifen 46, 50 auf der hangaufwärts gerichteten Fahrzeugseite auf den hierfür vorgegebenen Reifenfülldruck vollendet.

Zusammenfassend erlaubt es das erfindungsgemäße Verfahren, eine querneigungsbedingte Asymmetrie der Reifenaufstandsflächen durch Befüllen bzw. Entleeren der Fahrzeugreifen 44, 46, 48, 50 entsprechend der sich aus dem jeweils abgeleiteten Reifenfülldruck ergebenden Fülldruckempfehlung gezielt zu kompensieren. Hierzu erfolgt zumindest auf der hangabwärts gerichteten Seite des Fahrzeugsystems 10 eine geeignete Erhöhung des Reifenfülldrucks. Je nach Umständen wird der Reifenfülldruck auf der hangaufwärts gerichteten Seite zugleich entsprechend verringert. Im Idealfall stimmen die Reifenaufstandsflächen dann auf beiden Seiten des Fahrzeugsystems 10 miteinander überein. Traktionsverhalten und Spurhaltigkeit des Fahrzeugsystems 10 lassen sich so selbst bei schwierigen Bodenverhältnissen entscheidend verbessern.

## Patentansprüche

1. Verfahren zur Reifenfülldruckbestimmung eines Fahrzeugs, bei dem von einer Kontrolleinheit (20) Neigungsinformationen hinsichtlich einer Querneigung und/oder Querneigungsänderung des Fahrzeugsystems (10) entlang eines vorausliegenden Streckenverlaufs ermittelt werden, **dadurch gekennzeichnet, dass**
von der Kontrolleinheit (20) nach Maßgabe der ermittelten Neigungsinformationen radindividuell auftretende Radlasten berechnet werden, um einen zur Einhaltung einer vorgegebenen Reifenaufstandsfläche jeweils erforderlichen Reifenfülldruck abzuleiten.

2. Verfahren nach Anspruch 1, **dadurch gekennzeichnet, dass** die Neigungsinformationen von der Kontrolleinheit (20) seitens eines Neigungssensors (24) und/oder eines kartografischen Speichers (28) bereitgestellt werden.

3. Verfahren nach Anspruch 1 oder 2, **dadurch gekennzeichnet, dass** die Neigungsinformationen von der Kontrolleinheit (20) vorausschauend auf Grundlage des seitens eines Systems zur Spurplanung und/oder -haltung (32) festgelegten vorausliegenden Streckenverlaufs ermittelt werden.

4. Verfahren nach wenigstens einem der Ansprüche 1 bis 3, **dadurch gekennzeichnet, dass** die Vorgabe der Reifenaufstandsfläche von der Kontrolleinheit (20) in Abhängigkeit von Angaben hinsichtlich der Bodeneigenschaften, des Bodentyps, der Topografie und/oder der Wetterbedingungen angepasst wird.

5. Verfahren nach wenigstens einem der Ansprüche 1 bis 4, **dadurch gekennzeichnet, dass** von der Kontrolleinheit (20) nach Maßgabe des abgeleiteten Reifenfülldrucks durch Ansteuerung einer Anzeigeeinheit (56) eine Fülldruckempfehlung ausgegeben wird.

6. Verfahren nach wenigstens einem der Ansprüche 1 bis 5, **dadurch gekennzeichnet, dass** der abgeleitete Reifenfülldruck auf Veranlassung der Kontrolleinheit (20) durch Ansteuerung der Reifenfüllanlage (52) automatisiert in den betreffenden Fahrzeugreifen (44, 46, 48, 50) eingesteuert wird.

7. Verfahren nach Anspruch 6, **dadurch gekennzeichnet, dass** die Einsteuerung des abgeleiteten Reifenfülldrucks von der Kontrolleinheit (20) vorbehaltlich der vorherigen Freigabe durch einen Bediener veranlasst wird.

8. Verfahren nach wenigstens einem der Ansprüche 1 bis 7, **dadurch gekennzeichnet, dass** von der Kontrolleinheit (20) entlang des vorausliegenden Streckenverlaufs liegende Feld- und/oder Vorgewendegrenzen (64) bei der Ableitung des Reifenfülldrucks hinsichtlich eines zwischen gegenüberliegenden Fahrzeugseiten durchzuführenden Umfüllvorgangs der Fahrzeugreifen (44, 46, 48, 50) berücksichtigt werden.

9. Verfahren nach Anspruch 8, **dadurch gekennzeichnet, dass** eine Annäherung des Fahrzeugsystems (10) an eine entlang des vorausliegenden Streckenverlaufs liegende Feldund/oder Vorgewendegrenze (64) von der Kontrolleinheit (20) anhand des Aktivierungszustands eines Systems zur Unterstützung eines Wendemanövers (34) erkannt wird.

10. Verfahren nach Anspruch 8 oder 9, **dadurch gekennzeichnet, dass** eine Fahrt des Fahrzeugsystems (10) im Vorgewende bis zum Abschluss eines zwischen gegenüberliegenden Fahrzeugseiten durchzuführenden Umfüllvorgangs der Fahrzeugreifen (44, 46, 48, 50) verlangsamt bzw. verzögert wird.

## Claims

1. Method for determining the tyre inflation pressure of a vehicle, in which inclination information with regard to a transverse inclination and/or change in transverse inclination of the vehicle system (10) along a section of the route ahead is ascertained by a control unit (20), **characterized in that** wheel loads occurring with respect to the wheels individually are calculated by the control unit (20) in accordance with the ascertained inclination information in order to deduce a tyre inflation pressure required in each case for maintaining a preselected tyre contact area.

2. Method according to Claim 1, **characterized in that** the inclination information is provided by the control unit (20) by means of an inclination sensor (24) and/or a cartographic memory (28).

3. Method according to Claim 1 or 2, **characterized in that** the inclination information is ascertained by the control unit (20) predictively on the basis of the section of the route ahead, established by means of a system for track planning and/or keeping (32).

4. Method according to at least one of Claims 1 to 3, **characterized in that** the preselection of the tyre contact area is adapted by the control unit (20) in dependence on details specified with regard to the characteristics of the ground, the type of ground, the topography and/or the weather conditions.

5. Method according to at least one of Claims 1 to 4, **characterized in that** a recommendation for the inflation pressure is output by the control unit (20) in accordance with the deduced tyre inflation pressure by activating a display unit (56).

6. Method according to at least one of Claims 1 to 5, **characterized in that**, at the instigation of the control unit (20), the deduced tyre inflation pressure is applied in the relevant vehicle tyres (44, 46, 48, 50) in an automated manner by activating the tyre inflating system (52).

7. Method according to Claim 6, **characterized in that** the application of the deduced tyre inflation pressure is instigated by the control unit (20) subject to prior approval by an operator.

8. Method according to at least one of Claims 1 to 7, **characterized in that** field and/or headland boundaries (64) lying along the section of the route ahead are taken into account by the control unit (20) when deducing the tyre inflation pressure with regard to an inflation-adjusting operation of the vehicle tyres (44, 46, 48, 50) to be carried out between opposite sides of the vehicle.

9. Method according to Claim 8, **characterized in that** an approach of the vehicle system (10) to a field and/or headland boundary (64) lying along the section of the route ahead is detected by the control unit (20) on the basis of the activation state of a system for assisting a turning manoeuvre (34).

10. Method according to Claim 8 or 9, **characterized in that** a travelling movement of the vehicle system (10) in the headland is slowed or delayed until completion of an inflation-adjusting operation of the vehicle tyres (44, 46, 48, 50) to be carried out between opposite sides of the vehicle.

## Revendications

1. Procédé de détermination de la pression de gonflage des pneus d'un véhicule, dans lequel une unité de contrôle (20) détermine des informations d'inclinaison concernant une inclinaison transversale et/ou une variation d'inclinaison transversale du système de véhicule (10) le long d'un trajet à venir,
**caractérisé en ce que** l'unité de contrôle (20) calcule conformément aux informations d'inclinaison déterminées des charges de roue apparaissant individuellement par roue afin de dériver une pression de gonflage des pneus respectivement nécessaire pour respecter une surface de contact de pneu prédéfinie.

2. Procédé selon la revendication 1, **caractérisé en ce que** les informations d'inclinaison de l'unité de contrôle (20) sont fournies de la part d'un capteur d'inclinaison (24) et/ou d'une mémoire cartographique (28).

3. Procédé selon la revendication 1 ou 2, **caractérisé en ce que** les informations d'inclinaison de l'unité de contrôle (20) sont déterminées par anticipation sur la base d'un trajet à venir fixé de la part d'un système de planification et/ou de maintien de trajectoire (32).

4. Procédé selon au moins l'une des revendications 1 à 3, **caractérisé en ce que** la prédéfinition de la surface de contact de pneu de l'unité de contrôle (20) est adaptée en fonction d'indications concernant les propriétés du sol, le type de sol, la topographie et/ou les conditions météorologiques.

5. Procédé selon au moins l'une des revendications 1 à 4, **caractérisé en ce que** l'unité de contrôle (20) sort conformément à la pression de gonflage des pneus dérivée une recommandation de pression de gonflage par le pilotage d'une unité d'affichage (56).

6. Procédé selon au moins l'une des revendications 1 à 5, **caractérisé en ce que** la pression de gonflage des pneus dérivée est appliquée à la demande de l'unité de contrôle (20) de manière automatisée dans les pneus de véhicule (44, 46, 48, 50) concernés par le pilotage du système de gonflage des pneus (52).

7. Procédé selon la revendication 6, **caractérisé en ce que** l'application de la pression de gonflage des pneus dérivée est demandée par l'unité de contrôle (20) sous réserve de validation par un opérateur.

8. Procédé selon au moins l'une des revendications 1 à 7, **caractérisé en ce que** l'unité de contrôle (20) prend en compte des limites de champ et/ou de tournière (64) situées le long du trajet à venir lors de la dérivation de la pression de gonflage des pneus en vue d'un transvasement des pneus de véhicule (44, 46, 48, 50) à effectuer entre des côtés de véhicule opposés.

9. Procédé selon la revendication 8, **caractérisé en ce qu'**une approche du système de véhicule (10) d'une limite de champ et/ou de tournière (64) située le long du trajet à venir est reconnue par l'unité de contrôle (20) à l'aide de l'état d'activation d'un système d'assistance au demitour (34).

10. Procédé selon la revendication 8 ou 9, **caractérisé en ce qu'**un déplacement du système de véhicule (10) dans la tournière jusqu'à la fin d'un transvasement des pneus de véhicule (44, 46, 48, 50) à effectuer entre des côtés de véhicule opposés est ralenti ou retardé.
